# EUROPEAN PATENT SPECIFICATION

(11) **EP 4 643 075 B1**
(45) Date of publication and mention of the grant of the patent: **19.08.2026**
(21) Application number: 23833224.1
(22) Date of filing: 22.12.2023
(51) Int. Cl.: F28D 20/00

(54) **SENSIBLE HEAT DEVICE**
SENSIBLE WÄRMEVORRICHTUNG
DISPOSITIF DE CHALEUR SENSIBLE

(30) Priority: 27.12.2022 NL 2033841
(43) Date of publication of application: 05.11.2025
(73) Proprietor: Newton Energy Solutions Holding B.V., 2628 XH Delft (NL)
(72) Inventor: VAN VLIET, Laurens Daniël, 2628 XH Delft (NL); MOHANA, Martin, 2628 XH Delft (NL); BODIS, Pavol, 2628 XH Delft (NL); FISCHER, Michael, 76571 Gaggenau (DE); SCHANSKER, Fabian, 76571 Gaggenau (DE); BORAK, Zoran, 76571 Gaggenau (DE)
(74) Representative: Arnold & Siedsma
(86) International application number: PCT/NL2023/050683
(87) International publication number: WO 2024/144397

(56) References cited:
- EP-B1- 0 518 369
- EP-B1- 1 875 138
- DE-T2- 60 200 684

## Description

The present invention relates to sensible heat devices, in particular sensible heat devices for efficiently storing energy from a renewable energy source like a photovoltaic panel.

The energy sector is turning towards renewable energies to support the energy transition from fossil-fuel to carbon-free energy solutions. Renewable energy sources such as solar, wind and hydro-powered sources are yet typically fluctuating energy sources. The irregular energy production of renewable energy sources brings with it the issue of managing the balance between the supply and the demand at the local level or at the network level. EP 1 875 138 B is regarded as being the prior art closest to the subject-matter of claim 1, and discloses a sensible heat storage system, comprising a sensible heat storage device, comprising:- a thermally insulated tank comprising an interior reservoir for holding a fluid there within;- an inlet that enables a fluid connection between the interior reservoir of the thermally insulated tank and an environment outside said thermally insulated tank; wherein said inlet is arranged in a lower section of the thermally insulated tank and debouches in a lower portion of the interior reservoir;- an outlet that enables a fluid connection between the interior reservoir of the thermally insulated tank and an environment outside said thermally insulated tank; wherein said second in- and outlet is arranged n an upper portion of the interior reservoir; wherein the sensible heat storage system further comprises- a heat storage charging unit comprising a heat source, being preferably a flow through heater, wherein the heat storage charging unit is arranged for circulating heat storage fluid held in the sensible heat storage device from the inlet of the sensible heat storage device, through the heat source for heating the heat storage fluid and to the outlet for inserting the heated heat storage fluid into the sensible heat storage device- a heat storage discharging unit, wherein said heat storage discharging unit comprises a flow through heat exchanger that is arranged to be coupled to a heat consuming system, such as a hot water and/or heating system of a building, and is arranged for transferring heat from a heat storage fluid to the heat consuming system;wherein the heat storage discharging unit is arranged for circulating heat storage fluid held in the sensible heat storage device through the inlet of the sensible heat storage device, through the flow through the heat exchanger and through outlet for inserting the heat storage fluid into the sensible heat storage device.

A well-known challenge in the field is thus in times of overproduction the prolonged energy storage of the produced energy with a minimal energy loss. Among the storage options, power conversion into chemicals (Power-to-X) or heat (Power-to-Heat) are being investigated. Storage options based on conversion to heat use typically sensible heat devices, in which heat is stored in a fluid contained in a reservoir. In sensible heat storage, heat is stored in materials using the intrinsic heat capacity (Cp ) of the material. In contrast to latent heat storage and thermochemical storage, the material in sensible heat storage typically does not undergo a chemical and/or phase change. Sensible heat storage has the advantage over thermochemical heat storage and latent heat storage that it allows for relatively simple systems as no multiphase physics, complex kinetics etc. are involved. One method for storing sensible heat is in the form of hot water tanks.

Hot water tank technology may suffer heat losses over time due to the temperature difference between the environment and the temperature of the internal volume of the tank. Conventional sensible heat storage vessels may suffer from heat losses of 30% to 80% per week under ideal testing conditions. Long-term storage of heat for multiple days may therefore be challenging.

An example to minimize heat losses in a hot water tank is disclosed in US4286573 where a heat trap assembly is disclosed to prevent heat loss in the cold water inlet and hot water outlet piping systems.

Another example is disclosed in US9476599 where a hot water storage unit is disclosed comprising a relief device to improve on a pressure temperature relief valve which has been associated with heat loss.

Further methods to minimize heat losses include the addition of insulation layers around the vessels. One heat storage tank of the prior art is described by Thomas Beikircher (Vacuum tank stores heat, BINE-Projectinfo 14/2014), which discloses a vacuum insulated tank that can store heat for a prolonged time. The space between an inner and outer vessel is filled with perlite and placed under vacuum. However, such a heat storage tank still suffers from high thermal losses at the outlets where thermal bridges are formed. A thermal bridge is typically a direct thermal contact between the inner vessel and the outer vessel, that has a higher thermal conductivity than the material of the thermal insulation layer. In other words, a thermal bridge is a path of relatively low heat resistance. Thermal bridges can seriously affect the heat storing capability of the sensible heat device since in typically well-insulated heat storage devices, the majority of heat loss happens through such thermal bridges. An improved thermal storage tank is for instance disclosed in WO2022/219199A1, wherein the tank comprises only a limited number the thermal bridges, which are located in the bottom of the tank.

EP0518369 discloses a warm-water stratified accumulator having a tank and a guide pipe, which is arranged essentially vertically in the tank, opens at its upper end by means of an outlet into the tank, and into which there leads a feed-in pipe via which the warm water to be stored is fed into the guide pipe and which has openings arranged at different levels and leading into the tank, the point at which the water is fed from the feed-in pipe into the guide pipe being located at a medium level between the upper and lower ends of the guide pipe, and the openings being located only below the feed-in point. This priori art solution shows further a cold water inlet and a service water outlet. DE60200684T2 discloses in a heat storage tank, a discharge port of an introduction passage that is covered by a cup-shaped collision member constructed by a shield portion and a guide cover. In addition, a mixture protection plate having through holes is disposed in a tank body between the collision member and an inner surface of the tank body. Therefore, a high-speed water stream, upwardly injected from the discharge port, collides with the shield portion, and turns its flow direction by an approximately right angle. Thereafter, the water stream is guided by the guide cover to a lower side of the mixture protection plate. Accordingly, it can prevent water stored in the tank body from being mixed even when the injection water stream has a high speed. JP2014137159 discloses a heat storage device including a heat storage container having liquid storage space for storing a heating medium in a liquid phase; and a heat storage layer provided in the heat storage container so as to surround the liquid storage space, and formed by a heat storage material which stores heat by phase change from a solid state to a gel state, and radiates heat by the phase change from a gel state to a solid state. The heat storage material, for example, is made of a material which includes a paraffin compound, and also, in which the paraffin compound is immobilized so as to show a gel state at a melting point of the paraffin compound or higher. EP1875138 discloses a hot water installation comprising a storage vessel for holding a thermally stratified store of hot water; and a water heating circuit externally of the storage vessel. The vessel has, at the bottom, a connection for a cold feed for water entering the storage vessel and a feed to the external heating circuit, and, at the top, a connection for feeding hot water from the external heating circuit into the vessel and for delivering hot water as required on demand. The hot water installation is particularly useful as a domestic hot water installation. The installation allows existing hot water cylinders to be converted to be suitable for condensing boilers to provide an improved conversion of fuel to energy and heat-up rate for domestic hot water.

It is desired to provide a sensible heat device that does not suffer from one or more of the above-mentioned drawbacks of conventional sensible heat devices and further improves the heat storage capabilities of the sensible heat device.

This object, next to other objects, is met by a sensible heat storage system according to claim 1, comprising a thermally insulated tank comprising an interior reservoir for holding a fluid therewithin; a first in- and outlet that enables a fluid connection between the interior reservoir of the thermally insulated tank and an environment outside said thermally insulated tank; wherein said first in- and outlet is arranged in a lower section of the thermally insulated tank and debouches in a lower portion of the interior reservoir; a second in- and outlet that enables a fluid connection between the interior reservoir of the thermally insulated tank and an environment outside said thermally insulated tank; wherein said second in- and outlet is arranged in a lower section of the thermally insulated tank and debouches in an upper portion of the interior reservoir; wherein said second in- and outlet comprises an interior tube that extends upwardly through the interior reservoir from the lower section of the thermally insulated tank to the upper portion of the interior reservoir in which it debouches. It is noted that the relative position of the in- and outlets with respect to sections of the tank are associated with a warm water storage tank. A skilled person would realize that the relative position of the in- and outlets with respect to sections of the tank would be reversed for a cold water storage tank. For instance the first in-and outlet would be arranged in an upper section, while the second in- and outlet would be arranged in an upper section of the tank, would debouche in a lower portion of the interior reservoir, etc.

According to a preferred embodiment, the interior tube is a thermally insulated interior tube. In this way, thermal exchanges between the fluid inside the interior tube and the fluid in the reservoir outside of the interior tube can be avoided, reducing thus exergy losses.

In thermodynamics, the exergy of a system is the maximum useful work possible during a process that brings the system into equilibrium with a heat reservoir. Hence, water at 95°C has a higher exergy than water held at 80°C. As such, the thermally insulated tank is configured for storing heated heat storage fluid, i.e. a heated liquid, such as heated water, in a stratified manner in a series distinct layers having different mean temperatures while minimizing the mixing of, and thereby heat transfer between, the respective layers, such that the reservoir remains stratified. Such a stratified thermally insulated tank therefore even allows for storing small amounts of hot water, i.e. > 80°C, on top of a layer of colder water. Hence, a stratified sensible heat (i.e. thermal energy) storage device will, when compared to a non-stratified thermally insulated storage tank having the same amount of thermal energy stored, have a higher exergy stored. Due to the higher exergy of the hot water stored, the energy stored in the system can also be recouped, i.e. used, in an effective manner. By insulating the interior tube, heat transfer (i.e. the loss of exergy) from any hot liquid that is inserted through the second in- and outlet to the internal liquid held within the tank is significantly reduced, such that liquid reaches the top layer with a higher temperature (when compared to the non-insulated tube). As the same effect occurs when withdrawing hot liquid from the top, the reduction of loss of exergy is effectively doubled.

The mixing of stratified layers may further be reduced by the use of an internal stratification-promoting system, such an internal stratification-promoting system limit turbulence, and thereby mixing of the different layers, in the tank when hot water is drawn out through the second in- and outlet, while drawing in cold water through the first in- and outlet, and vice versa. The internal stratification-promoting system may comprise an upper perforated plate that is arranged orthogonally with the insulated interior tube within an upper portion of the interior reservoir and may comprise a lower perforated plate that is arranged orthogonally with the insulated interior tube within the lower portion of the interior reservoir. Such perforated plates limit the turbulence. According to a preferred embodiment, the thermally insulated tank comprises an internal vessel that comprises the interior reservoir; an outer vessel that encloses the internal vessel; and a first thermal insulation layer that is arranged between the inner and outer vessels. In this way, energy loss between the fluid in the interior reservoir and the outside environment outside of the outer vessel can be minimized.

According to a preferred embodiment, said first and second in- and outlets are the only in- and outlets of the thermally insulated tank and are, preferably, arranged in the bottom (section) of the thermally insulated tank. In this way, the thermal bridges inherently present at the in- and outlets are arranged in the section of the thermally insulated tank with the lowest temperature difference between the fluid inside and the outside environment to minimize thermal losses.

According to a preferred embodiment, the thermally insulated interior tube comprises an internal interior tube; an outer interior tube that encloses the internal interior tube; and an internal space (43) that is arranged between the inner and outer interior tubes;
wherein a pressure in said internal space is lower than 1x10⁴ Pa, preferably lower than 1x10³ Pa, more preferably lower than 1x10² Pa, even more preferably lower than 1 x10¹ Pa, most preferably lower than 1 Pa, and/or
wherein said internal space (43) comprises a second thermal insulation layer, and/or
wherein the internal space (43) has an apparent (often also referred to as effective) thermal conductivity in the range of 0.001 W/mK and 1 W/mK, preferably in the range of 0.001 W/mK and 0.1 W/mK, more preferably in the range of 0.001 W/mK and 0.01 W/mK, most preferably in the range of 0.001 W/mK and 0.004 W/mK. The apparent thermal conductivity is a measure of the combined heat transfer due to conductivity, convection and radiation. In this way, thermal losses during travel of the fluid through the interior tube by thermal exchange with the fluid in the rest of the reservoir are minimized, despite the temperature gradient present along the outer interior tube. Indeed, the temperature distribution of the fluid inside the interior reservoir is not uniform as fluid with a relatively higher temperature and thus with a relatively lower density will naturally accumulate in the upper portion of the interior reservoir while fluid with a relatively lower temperature and thus a relatively higher density will accumulate in the lower portion of the interior reservoir. In addition to this natural phenomenon, the temperature gradient may be increased by the first in- and outlet being the cold inlet and the second in- and outlet being the warm inlet for the device.

According to a preferred embodiment, said first thermal insulation layer comprises a first vacuum insulation element and/or wherein said second thermal insulation layer comprises a second vacuum insulation element, preferably wherein said first and/or second vacuum insulation element has an apparent thermal conductivity in the range of 0.001 W/mK and 0.004 W/mK at a residual gas pressure of 0.1 mbar and a mean temperature between 50 and 300 °C. Using vacuum insulation element as insulation layer may improve the insulation properties of the tank and/or the interior tube. A material for such a vacuum insulation element is, for instance, disclosed in EP 3225728 A1.

According to a preferred embodiment, the first and second vacuum insulation elements are in fluid connection with each other, such that they share a mutual vacuum. In this way, thermal bridges at the connection of the interior tube with the thermally insulated tank may be further reduced.

The sensible heat storage system comprises a sensible heat storage device as defined above comprising a heat storage fluid; a heat storage charging unit comprising a heat source, being preferably a flow through heater, wherein the heat storage charging unit is arranged for circulating heat storage fluid held in the sensible heat storage device from the first in- and outlet of the sensible heat storage device, through the heat source for heating the heat storage fluid and to the second in- and outlet for inserting the heated heat storage fluid into the sensible heat storage device. In this way, the first in- and outlet may be the cold inlet and the second in- and outlet may be the warn inlet for the device, and the heat storage charging unit may transform electrical energy into thermal energy. Alternatively the heat source may be a flow through heat exchanger that is arranged to be coupled to a heat generating system, for instance a heat pump.

It is noted that the sensible heat storage system described hereabove and in all the embodiments given below, can also be arranged with a sensible heat storage device wherein the interior tube is not a thermally insulated interior tube.

According to a preferred embodiment, the heat source is a flow through heater, preferably a single pass flow through heat exchanger, is arranged for heating the heat storage fluid to a pre-set target temperature of at least 80°C, preferably at least 85°C, more preferably at least 90°C, most preferably at least 95°C, in a single pass through the flow through heater. This allows to heat the water, that flows from a bottom layer of the tank at a temperature of, for instance, 20°C directly (i.e. in a single pass) to the pre-set target temperature. This reduces the need for, for instance, staggering a plurality of heaters, or the use of an cumbersome recirculation path wherein the water is circulated a number of time through the heater, in order to achieve the pre-set target temperature. In a preferred embodiment, a number of (single pass) flow through heat exchanges may be arranged in parallel in order to increase the heating power of the heat storage charging unit. According to a preferred embodiment, the heat source is a flow through heater and said flow through heater comprises a spiraling and/or meandering flow path that is arranged on a thick film heating element. The flow through heater provides instantaneous, precise and efficient liquid heating.

According to a preferred embodiment, the heat storage charging unit does not comprise a fluid driving unit, such as a pump, for driving the flow of heat storage fluid through the heat storage charging unit. In such an embodiment, gravity and natural convection may suffice to drive the fluid through the system.

According to a preferred embodiment, the system comprises a first fluid driving unit, such as a pump, for driving the flow of heat storage fluid through the heat storage charging unit. In this way, the flow rate of heat storage fluid through the heat storage charging unit may be forced, controlled. According to a preferred embodiment, said heat storage charging unit comprises a control valve for selectively restricting the flow rate of the heat storage fluid through the heat storage charging unit. In this way, the flow rate of heat storage fluid through the heat storage charging unit may be controlled.

According to a preferred embodiment, the system comprises a flow direction control unit, in particular wherein the flow direction control unit comprises a first flow control valve and/or first check valve that is arranged in the heat storage charging unit, that is arranged such that heat storage fluid, when flowing through the heat storage charging unit, can only flow from the first in- and outlet, through the heat source for heating the heat storage fluid and to the second in- and outlet. In this way, a closed heat storage charging path can be implemented, in which the flow of heated fluid is kept short to reduce heat losses.

According to a preferred embodiment, the system further comprises a controller for controlling the flow rate through the heat storage charging unit, in particular through the heat source, preferably through the flow through heater, by preferably controlling the control valve and/or fluid driving unit. In this way, a regulation of the temperature of the fluid, the flow rate, the energy consumption by the heat storage charging unit may be obtained.

According to a preferred embodiment, the controller comprises an input for receiving an amount of electrical power that is available for the heat storage charging unit for charging said sensible heat storage device, wherein said controller is arranged for controlling the heat source, preferably the flow through heater, to consume the amount of electrical power available, and/or wherein the controller is arranged for controlling the flow rate through the heat storage charging unit, in particular through the heat source, preferably through the flow through heater, such that the fluid passing the heat storage charging unit, in particular passing the heat source, preferably through the flow through heater, is heated to the pre-set target temperature. In this way, electrical energy provided for instance from a renewable energy source like a photovoltaic panel can be transformed and stored at will as heat into the sensible heat storage system. It is possible to use all energy from the respective energy source, or only the excess energy that would otherwise be fed back into the public grid. Hence, the amount of electrical power that is available can be defined by taking into account one or more optimization criteria, such as the actual price of the electricity delivered to the grid and/or other costs-related parameters, the season (in the winter on would, for instance, have a higher localized (e.g. domestic) demand for heat than in the summer), the state of charge of the heat storage device, etcetera.

The sensible heat storage system further comprises a heat storage discharging unit, wherein said heat storage discharging unit comprises a flow through heat exchanger that is arranged to be coupled to a heat consuming system, such as a hot water and/or heating system of a building, and is arranged for transferring heat from a heat storage fluid to the heat consuming system; wherein the heat storage discharging unit is arranged for circulating heat storage fluid held in the sensible heat storage device through the second in- and outlet of the sensible heat storage device, through the flow through heat exchanger and through the first in- and outlet for inserting the heat storage fluid into the sensible heat storage device. The heat discharging unit may be used to couple the sensible heat storage system to a local heat consuming system, for instance a heating system of a building. In this way, a delay between the production of energy and the consumption of said energy may be realized. During storage, energy may be stored in the form in which it will be finally used to avoid further conversion losses. Alternatively, the heat storage discharging unit may be based on a further conversion of energy (heat flux to electrical energy or mechanical energy). In this way the system with a heat storage charging unit and a heat storage discharging unit both coupled to the first and second in- and outlets avoids creating additional thermal bridges, improving thus further the efficiency of the system. The fluid flow at the first and second in- and outlets may thus be circulating in two opposite directions depending on whether the fluid is circulating through the heat storage charging or discharging unit. When the fluid is circulating through the heat storage discharging unit, the first in- and outlet operates then as an inlet, while the second in- and outlet operates as outlet. When the fluid is circulating through the heat storage charging unit, the first in-and outlet operates then as an outlet, while the second in- and outlet operates as inlet.

According to a preferred embodiment, the flow direction control unit is arranged such that the heat storage fluid, when flowing through the heat storage discharging unit, can only flow from the second in- and outlet, through the flow through heat exchanger and to the first in- and outlet, the flow direction control unit preferably comprises a second flow control valve and/or second check valve that is arranged in the heat storage discharging unit. In this way, a closed heat discharging path can be ensured. In particular, when the system comprises both the heat storage charging unit and heat storage discharging unit, the flow direction control unit is arranged such that liquid that flows out of the internal reservoir in a second direction from the second in- and outlet to the first in- and outlet flows through the heat exchanger and liquid that flows out of the internal reservoir in a second direction, opposite from the first direction, from the first in- and outlet to the second in-and outlet flows through the heat source, preferably through the flow through heater.

It is noted further that in case a heat storage charging unit and a heat storage discharging unit are arranged, the first check valve, that can be arranged in the heat storage charging unit, also prevents a flow through heat storage charging unit when heat storage discharging unit is functioning; vice versa the second check valve can prevent a flow through the heat storage discharging unit when the heat storage charging unit is in operation. Thereby, the induced direction of flow, of said directions, automatically enforces whether the flow is to pass through the heat storage charging unit or the heat storage discharging unit. Instead of, for instance a combination of a first and second check valve as described above, the flow direction control unit may also comprise a three-way valve that is controlled for selecting the flow path, such that the flow direction control unit functions as described above.

According to a preferred embodiment, the heat storage discharging unit comprises a second fluid driving unit, such as a pump, for driving the flow of heat storage fluid through the heat storage discharging unit. In this way, the extraction of heat from the system can be controlled.

According to a preferred embodiment, the second fluid driving unit is a uni-directional second fluid driving unit, such as a uni-directional pump, that is arranged in between the second and first in- and outlets along the flow path of the heat discharging unit. A uni-directional second fluid driving unit can specifically be associated with the flow path of the heat discharging unit. In addition, a uni-directional pump is a silent type of pump that can reliable operated for longer periods.

According to a preferred embodiment, the first and second fluid driving units are formed by a single bi-directional fluid driving unit, such as a bi-directional pump, wherein said single bi-directional fluid driving unit is arranged in between the second and first in- and outlets along the flow path of the heat discharging unit and in between the first and second in- and outlets along the flow path of the heat charging unit. In such an embodiment, a single element is used for both charging and discharging paths reducing thus the complexity of the system.

According to a preferred embodiment, said first and second fluid driving units are formed by a pair of uni-directional fluid driving units, such as uni-directional pumps, wherein said pair of uni-directional fluid driving units is arranged in series in between the second and first in- and outlets along the flow path of the heat discharging unit and in between the first and second in- and outlets along the flow path of the heat charging unit. In such an embodiment, one of the pumps is always passively driven. As this setup combines two uni-directional pumps, such that a reliable and silent system is obtained.

Preferred embodiments are further described by the following clauses:
Clause 1. Sensible heat storage device, comprising:
   - a thermally insulated tank comprising an interior reservoir for holding a fluid therewithin;
   - a first in- and outlet that enables a fluid connection between the interior reservoir of the thermally insulated tank and an environment outside said thermally insulated tank; wherein said first in- and outlet is arranged in a lower section of the thermally insulated tank and debouches in a lower portion of the interior reservoir;
   - a second in- and outlet that enables a fluid connection between the interior reservoir of the thermally insulated tank and an environment outside said thermally insulated tank; wherein said second in- and outlet is arranged in a lower section of the thermally insulated tank and debouches in an upper portion of the interior reservoir;

   wherein said second in- and outlet comprises an interior tube that extends upwardly through the interior reservoir from the lower section of the thermally insulated tank to the upper portion of the interior reservoir in which it debouches, **characterized in that**
   said interior tube is a thermally insulated interior tube.
Clause 2. Sensible heat storage device according to clause 1, wherein said thermally insulated tank comprises:
   - an internal vessel that comprises the interior reservoir;
   - an outer vessel that encloses the internal vessel; and
   - a first thermal insulation layer that is arranged between the inner and outer vessels.
Clause 3. Sensible heat storage device according to clause 1 or 2, wherein said first and second in-and outlets are the only in- and outlets of the thermally insulated tank and are, preferably, arranged in the bottom of the thermally insulated tank.
Clause 4. Sensible heat storage device according to any of the preceding clauses, wherein thermally insulated interior tube comprises:
   - an internal interior tube;
   - an outer interior tube that encloses the internal interior tube; and
   - an internal space that is arranged between the inner and outer interior tubes;

   wherein a pressure in said internal space is lower than 1x10⁴ Pa, preferably lower than 1x10³ Pa, more preferably lower than 1x10² Pa, even more preferably lower than 1 x10¹ Pa, most preferably lower than 1 Pa, and/or
   wherein said internal space comprises a second thermal insulation layer, and/or
   wherein the internal space has an apparent thermal conductivity in the range of 0.001 W/mK and 1 W/mK, preferably in the range of 0.001 W/mK and 0.1 W/mK, more preferably in the range of 0.001 W/mK and 0.01 W/mK, most preferably in the range of 0.001 W/mK and 0.004 W/mK..
Clause 5. Sensible heat storage device according to any of the preceding clauses, wherein said first thermal insulation layer comprises a first vacuum insulation element and/or wherein said internal space comprises a second thermal insulation layer comprises a second vacuum insulation element, preferably wherein said first and/or second vacuum insulation element has an apparent thermal conductivity in the range of 0.001 W/mK and 0.004 W/mK at a residual gas pressure of 1x10¹ Pa and a mean temperature between 50 and 300 °C.
Clause 6. Sensible heat storage device according to clause 5, wherein the first vacuum insulation element and said internal space are in fluid connection with each other, such that they share a mutual vacuum.
Clause 7. Sensible heat storage system, comprising:
   - a sensible heat storage device according to any of the preceding clauses comprising a heat storage fluid;
   - a heat storage charging unit comprising a flow through heater, wherein the heat storage charging unit is arranged for circulating heat storage fluid held in the sensible heat storage device from the first in- and outlet of the sensible heat storage device, through the flow through heater for heating the heat storage fluid and to the second in- and outlet for inserting the heated heat storage fluid into the sensible heat storage device.
Clause 8. Sensible heat storage system according to clause 7, wherein said flow through heater is arranged for heating the heat storage fluid to a pre-set target temperature of at least 80°C, preferably at least 85°C, more preferably at least 90°C, most preferably at least 95°C, in a single pass through the flow through heater.
Clause 9. Sensible heat storage system according to clause 7 or 8, wherein said flow through heater comprises a spiraling and/or meandering flow path that is arranged on a thick film heating element.
Clause 10. Sensible heat storage system according to any of the preceding clauses 7 - 9, wherein the heat storage charging unit does not comprise a fluid driving unit, such as a pump, for driving the flow of heat storage fluid through the heat storage charging unit.
Clause 11. Sensible heat storage system according to any of the preceding clauses 7 - 9, wherein the system comprises a first fluid driving unit, such as a pump, for driving the flow of heat storage fluid through the heat storage charging unit.
Clause 12. Sensible heat storage system according to any of the preceding clauses, wherein said heat storage charging unit comprises a control valve for selectively restricting the flow rate of the heat storage fluid through the heat storage charging unit, in particular through the flow through heater.
Clause 13. Sensible heat storage system according to any of the preceding clauses, wherein the system comprises a flow direction control unit, in particular wherein the flow direction control unit comprises a first flow control valve and/or that is arranged in the heat storage charging unit, that is arranged such that heat storage fluid, when flowing through the heat storage charging unit, can only flow in the direction from the first in- and outlet, through the flow through heater for heating the heat storage fluid and to the second in- and outlet.
Clause 14. Sensible heat storage system according to any of the preceding clauses, wherein the system further comprises a controller for controlling the flow rate through the heat storage charging unit, in particular through the flow through heater, by preferably controlling the control valve and/or fluid driving unit.
Clause 15. Sensible heat storage system according to clause 14, wherein the controller comprises an input for receiving an amount of electrical power that is available for the heat storage charging unit for charging said sensible heat storage device, wherein said controller is arranged for controlling the flow through heater to consume the amount of electrical power available; and/or wherein the controller is arranged for controlling the flow rate through the heat storage charging unit, in particular through the flow through heater, such that the fluid passing the heat storage charging unit, in particular passing the flow through heater, is heated to the pre-set target temperature.
Clause 16. Sensible heat storage system according to any of the preceding clauses, wherein the sensible heat storage system further comprises a heat storage discharging unit, wherein said heat storage discharging unit comprises a flow through heat exchanger that is arranged to be coupled to a heat consuming system, such as a hot water and/or heating system of a building, and is arranged for transferring heat from a heat storage fluid to the heat consuming system;
   wherein the heat storage discharging unit is arranged for circulating heat storage fluid held in the sensible heat storage device through the second in- and outlet of the sensible heat storage device, through the flow through heat exchanger and through the first in- and outlet for inserting the heat storage fluid into the sensible heat storage device.
Clause 17. Sensible heat storage system according to clause 16, wherein the flow direction control unit is arranged such that the heat storage fluid, when flowing through the heat storage discharging unit, can only flow in the direction from the second in- and outlet, through the flow through heat exchanger and to the first in- and outlet, wherein the flow direction control unit preferably comprises a second flow control that is arranged in the heat storage discharging unit.
Clause 18. Sensible heat storage system according to any of the preceding clauses, wherein the heat storage discharging unit comprises a second fluid driving unit, such as a pump, for driving the flow of heat storage fluid through the heat storage discharging unit.
Clause 19. Sensible heat storage system according to clause 10 and 18, wherein said second fluid driving unit is a uni-directional second fluid driving unit, such as a uni-directional pump, that is arranged in between the second and first in- and outlets along the flow path of the heat discharging unit.
Clause 20. Sensible heat storage system according to clause 11 and 18, wherein said first and second fluid driving units are formed by a single bi-directional fluid driving unit, such as a bi-directional pump, wherein said single bi-directional fluid driving unit is arranged in between the second and first in- and outlets along the flow path of the heat discharging unit and in between the first and second in- and outlets along the flow path of the heat charging unit.
Clause 21. Sensible heat storage system according to clause 11 and 18, wherein said first and second fluid driving units are formed by a pair of uni-directional fluid driving units, such as uni-directional pumps, wherein said pair of uni-directional fluid driving units is arranged in series in between the second and first in- and outlets along the flow path of the heat discharging unit and in between the first and second in- and outlets along the flow path of the heat charging unit.

This and other aspects of the present invention will now be described in more detail, with reference to the appended drawings showing currently preferred embodiments of the invention, wherein:
- Figure 1 illustrates a schematic cross section of a sensible heat storage device according to an embodiment of the invention;
- Figure 2 illustrates a schematic representation of a sensible heat storage system according to a first embodiment;
- Figure 3 illustrates a schematic representation of a sensible heat storage system according to a second embodiment
- Figure 4 illustrates a schematic representation of a sensible heat storage system according to a third embodiment.
- Figure 5 illustrates a schematic representation of a sensible heat storage system according to a fourth embodiment.
- Figure 6 illustrates a schematic representation of a sensible heat storage system according to a fifth embodiment.
- Figure 7 illustrates a schematic representation of a sensible heat storage system according to a sixth embodiment.

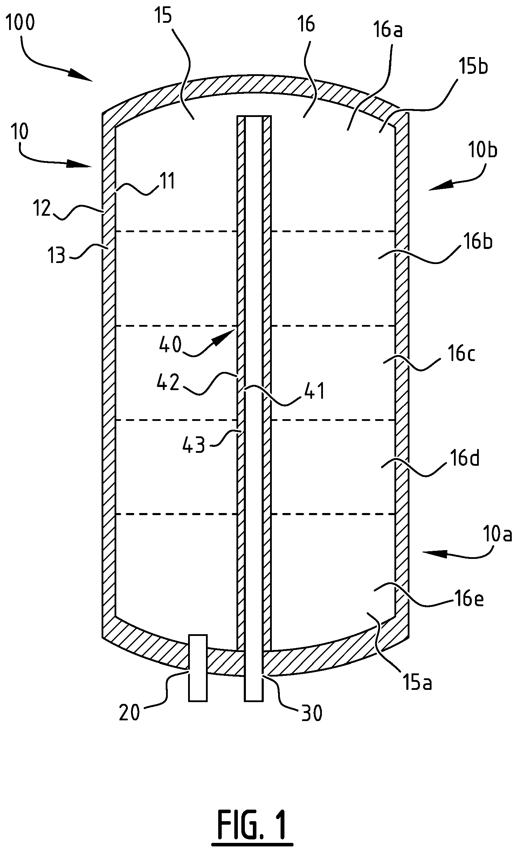

Figure 1 illustrates a schematic cross section of a sensible heat storage device 100 according to an embodiment of the invention. The sensible heat storage device 100 comprises a thermally insulated tank 10 comprising an interior reservoir 15 for holding a fluid therewithin; a first in- and outlet 20 that enables a fluid connection between the interior reservoir of the thermally insulated tank 10 and an environment outside said thermally insulated tank 10. The tank 10 is insulated using a vacuum insulation and comprises an internal vessel 11 that encloses the interior reservoir 15, an outer vessel 12 that encloses the internal vessel 11 and a first thermal insulation layer 13 that is arranged between the inner and outer vessels 11, 12. It is noted that the first thermal insulation layer 13 comprises a first vacuum insulation element having an apparent thermal conductivity in the range of 0.001 W/mK and 0.004 W/mK at a residual gas pressure of 0.1 mbar and a mean temperature between 50 and 300 °C.

The thermally insulated tank 10 is arranged for storing a heated liquid, in particular hot water, in its internal reservoir 15. In order to maximize the usefulness of the stored energy, a high as possible stored exergy, rather than a high as possible stored energy, is to be aimed at. In thermodynamics, the exergy of a system is the maximum useful work possible during a process that brings the system into equilibrium with a heat reservoir. Hence, water at 95°C has a higher exergy than water held at 80°C. As such, the thermally insulated tank 10 is configured for storing heated heat storage fluid 16, i.e. a heated liquid 16, such as heated water, in a stratified manner in a series of stacked and distinct layers 16a - 16e, wherein the temperature of the various layers can differ quite significantly, while minimizing the mixing of the respective layers 16a - 16e, such that the reservoir remains stratified. Hence, in particular cases is could be, in rather extreme cases, that a first layer 16a is at an average temperature of, for instance, 95°C, whereas a second, underlying, layer 16b is significantly colder, e.g. at an average temperature of 20°C. Such a stratified thermally insulated tank 10 will therefore have a much higher exergy stored, when compared to a non-stratified thermally insulated tank having the same amount of thermal energy stored.

The first and second in- and outlets 10, 20 are both arranged in a lower section 10a of the thermally insulated tank 10. The first in- and outlet 10 subsequently debouches in a lower portion 15a of the interior reservoir 15, whereas the second in- and outlet 20 subsequently debouches in an upper portion 15b of the interior reservoir 15. As the in- and outlets 20, 30 protrude through the outer vessel 12, through the first thermal insulation layer 13 and through the inner vessel 11, the effectively (thermally) connect the inner and outer vessels 11, 12 thereby forming thermal bridges that facilitate a loss of heat from the internal reservoir 15 to the surrounding environment. As the lowest layer 16e will typically comprise the stored liquid at the lowest temperature of all layers 16a - 16e, the thermal losses from the tank 10, through the respective thermal bridges, are reduced.

Furthermore, the interior tube 40, that is connected to the second in- and outlet 20 to extend upwardly through the reservoir 15 to an upper portion 15b to debouch in the upper portion 15b. Heated liquid, e.g. at 95°C, that is inserted, during charging the sensible heat storage device 100, into the thermally insulated tank 10 passes through the respective layers 16b - 16e having a lower temperature, such that when said interior tube 40 would be uninsulated, a loss of exergy would occur as the heated liquid would transfer heat to the lower layers 16b - 16e as it travels upwards through the tube 40. This in effect, does not result in a loss of energy, as the energy is still stored in the tank 10, but does result in a loss of exergy, as the liquid is cooled as it travels upwards.

By providing an insulated interior tube 40, that in the current example, comprises an internal interior tube 41, an outer interior tube 42 that encloses the internal interior tube 41 and an internal space 43 held at a pressure below atmospheric pressure, in particular at a vacuum, that is arranged between the respective tubes 41, 42, the heated liquid that is inserted through the interior tube 40 is insulated for reducing heat loss to the lower layers 16b - 16e, thereby increasing the stored exergy. Note that, as the insulation also prevents heat transfer when heated liquid is extracted, through the insulated interior tube 40 and second in- and outlet 30, from the top layer 16a of the thermally insulated tank 10, the effect of improving the exergy of the heat storage device 100 is thereby effectively doubled.

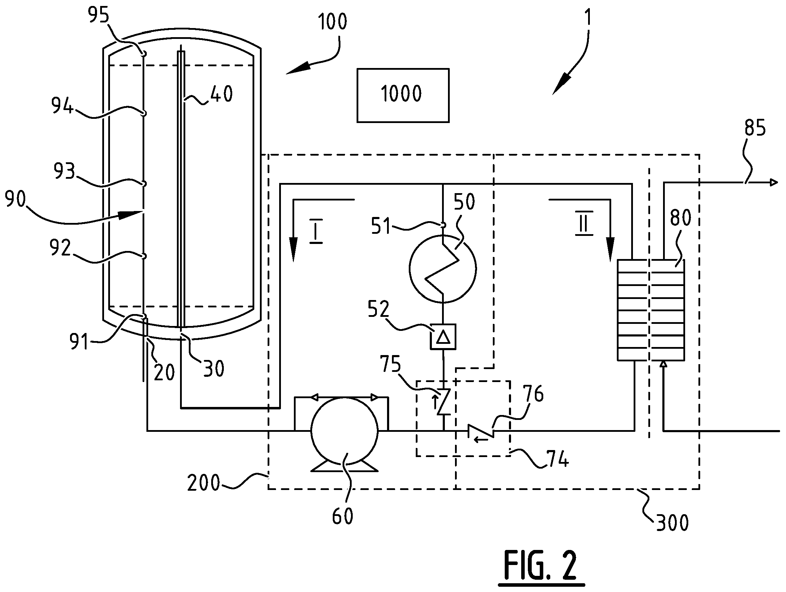

Figure 2 illustrates a schematic representation of a sensible heat storage system 1 that comprised the sensible heat storage device 100 of figure 1. The system 1 is further seen to comprise a heat storage charging unit 200 comprising at least a flow through heater 50. The heat storage charging unit 200 is arranged for circulating, using the bi-directional pump 60, the heat storage fluid, e.g. heated water, held in the sensible heat storage device 100 from the first in- and outlet 20 of the sensible heat storage device, through the flow through heater 50 for heating the water and to the second in- and outlet 30 for inserting the heated water into the sensible heat storage device 100. The heated water is re-inserted through the insulated interior tube 40 to an upper portion 15b of the internal reservoir 15, such that heat storage device 100 becomes, or remains, a stratified sensible heat storage device 100. The heat storage device 100 is seen to comprise a distributed reservoir temperature sensing unit 90, comprising a plurality of reservoir temperature sensors 91, 92, 93, 94, 95 that are arranged, in a one-dimensional array, along the height of the interior reservoir 15 for determining temperatures at various heights in the sensible heat storage device 100.

The heat storage charging unit 200 further comprises a flow direction control unit 74, comprising a first check valve 75, such that heat storage fluid, when flowing through the heat storage charging unit 200, can only flow through the heat storage charging unit 200, in particular through the flow through heater 50, in a direction I from the first in- and outlet 20 to the second in- and outlet 30. In order to prevent mixing of hotter and colder layers 16a - 16e, and thereby to break up the stratification, it is important that the heated water is only inserted through the second in- and outlet 30. The check valve 75 is an option to serve this purpose.

The sensible heat storage system 1 further comprises a controller 1000 that is configured for controlling the flow rate through the heat storage charging unit 200, in particular through the flow through heater 50, by controlling the pumping direction and pumping flow rate of the bi-directional pump 60. For this purpose, the controller 1000 has an input for receiving an amount of electrical power that is available for the heat storage charging unit 200 for charging said sensible heat storage device 100. This amount may be manually determined and set by a user or may be automatically detected by determining an amount of power that is fed back, from a local power grid, for instance, comprising local power producing means, such as PV panels and/or wind turbine generators, to a non-local, i.e. public, power grid. The controller is arranged (i.e. configured) for controlling the flow through heater 50 to consume the amount of electrical power available and for controlling the flow rate through the flow through heater 50, such that the fluid passing the flow through heater 50, is heated to the pre-set target temperature, which is preferably at least 80°C. In the current embodiment, the heat storage charging unit 200 may comprise a charging flow rate sensor 52 for determining the rate of flow of liquid flowing through the flow through heater 50 and may comprise a charging temperature sensor 51 for determining the temperature of the liquid exiting the flow through heater 50. The controller 1000 is then configured to apply feedback control based on input from the charging flow rate sensor 52 and charging temperature sensor 51 for controlling to flow through the heater 50, by controlling the bi-directional pump 60, in order to control the heat storage charging unit 200 such that the temperature of the liquid exiting the flow through heater 50 is at a target temperature of at least 80°C, preferably at least 95°C.

The controller 1000 can also be configured to determine a state of charge of the sensible heat storage device 100 on the basis of the determined temperatures at various heights in its reservoir 15. On the basis of the state of charge, the controller 1000 may, if the state of charge is near its maximum (for instance if all the sensors of the distributed sensors measure that substantially the full reservoir is at, or near, the pre-set target temperature), further be arranged for reducing power sent to the heater 50 and/or reducing the flow through the heater 50 when charging.

The sensible heat storage system 1 further comprises the heat storage discharging unit 300 that comprises a flow through heat exchanger 80 that is arranged to be coupled to a heat consuming system 85, such as a hot water and/or heating system of a building, and is arranged for transferring the heat from the heat storage fluid to the heat consuming system 85, thereby effectively consuming the energy stored in the sensible heat storage device 100. The heat storage fluid, e.g. water, thereby enters the flow through heat exchanger 80 at a first temperature and exits at a second temperature, wherein the first temperature is higher than the second temperature. The controller 1000 may also be configured to control the system for forcing hot liquid from heat storage device 100 to the heat storage discharging unit 300 in case the state of charge is nonzero (i.e. when at least the top reservoir temperature sensors 95 detects a layer of heated liquid present in the reservoir) and there is a demand at the user side.

The bi-directional pump 60 is arranged for circulating heat storage fluid held in the sensible heat storage device 100 through the second in- and outlet of the sensible heat storage device 100, through the flow through heat exchanger 80 and through the first in- and outlet 20 for inserting the cooled down heat storage fluid into the sensible heat storage device 100. The heat storage discharging unit 300 has a second check valve 76 that is arranged such that heat storage fluid, when flowing through the heat storage discharging unit 300, can only flow through heat exchanger 80 in a direction II from the second in- and outlet 30 to the first in- and outlet 20. The controller 1000 is therefore arranged for reversing the pumping direction of the bi-directional pump 60. It is noted that the first check valve 75, that is arranged in the heat charging unit 200, also prevents a flow through heat storage charging unit 200 when heat storage discharging unit 300 is functioning and vice versa second check valve 76 prevents a flow through heat storage discharging unit 300 when heat storage charging unit 200 is in operation. Thereby, the induced direction of flow, of said directions I,II, automatically enforces whether the flow passes through heat storage charging unit 200 or heat storage discharging unit 300.

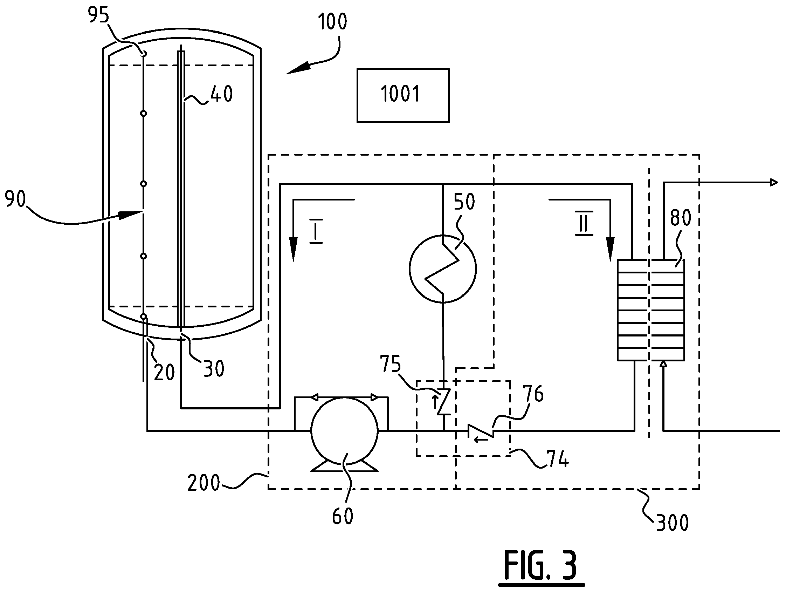

Figure 3 illustrates a schematic representation of a second embodiment of the sensible heat storage system 2, that is substantially similar to the sensible heat storage system 1 of figure 2 that is configured for an alternative control strategy. Sensible heat storage system 2 does not require, and preferably does not comprise, a charging temperature sensor 51 and charging flow rate sensor 52. For this purpose, the bi-directional pump 60 is preferably calibrated, such that a direct relation between an input command (e.g. supply voltage or supply current for an electrically driven pump) and resulting flow rate if obtained. Thereby, the controller 1001 is able to determine, on the basis of the input given to the pump 60, a flow rate of the liquid through the heater 50. On the basis of the estimated flow rate and the power provided to the flow through heater 50, the output temperature of the liquid at the output of the heater 50 is thereby determinable, such that the controller 1001 is arranged for controlling the flow rate on the basis of the estimated output temperature in order to reach the target temperature. Note that, alternatively to estimating the flow rate on the basis of the input command to the pump 60, a charging flow rate sensor 52 can also be provided.

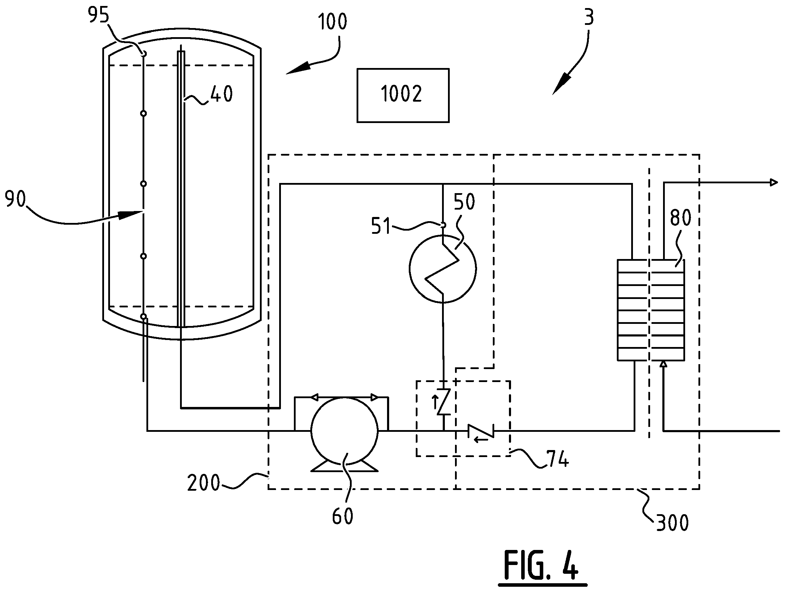

Figure 4 illustrates a schematic representation of a third embodiment of the sensible heat storage system 3, that is substantially similar to the sensible heat storage system 1 of figure 2, and substantially similar to the sensible heat storage system 2 of figure 3, that is configured for a further alternative control strategy. The heat storage charging unit 200 comprises the charging temperature sensor 51 for determining the temperature of the liquid exiting the flow through heater 50, and does not need the charging flow rate sensor 52. The controller 1002 is then configured to apply feedback control based on input from the charging temperature sensor 51 for controlling to flow through the heater 50, by controlling the bi-directional pump 60, in order to control the heat storage charging unit 200 such that the temperature of the liquid exiting the flow through heater 50 is at a target temperature of at least 80°C, preferably at least 95°C.

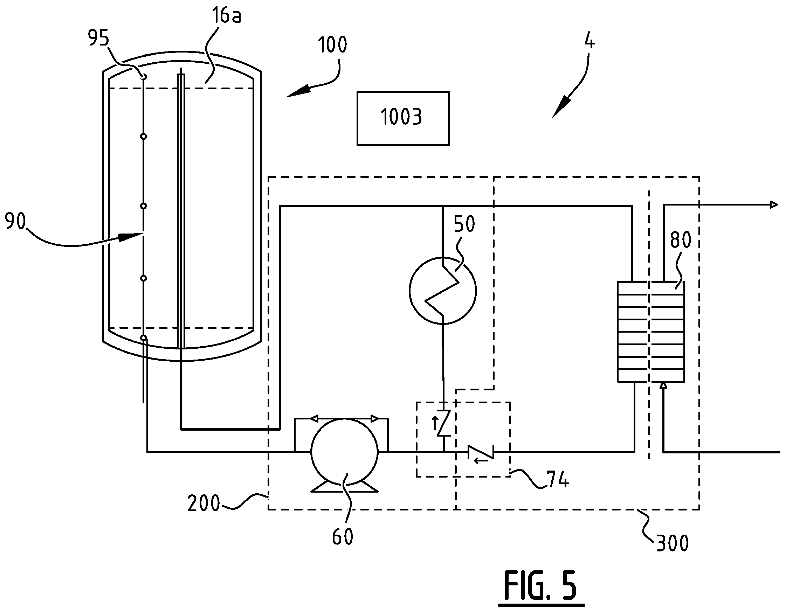

Figure 5 illustrates a schematic representation of a fourth embodiment of the sensible heat storage system 4, that is substantially similar to previous embodiments of the sensible heat storage system 1, 2, 3 that is configured for an even further alternative control strategy. The controller 1003 is arranged for controlling the flow rate of the bi-directional pump 60 on the basis the distributed reservoir temperature sensing unit 90, in particular on the basis of, preferably only, the top reservoir temperature sensors 95. For this, the controller 1003 is configured for determining the change of temperature in the top layer 16a of the reservoir 15 over a period of time, thereby the controller 1001 is able to estimate a temperature of the liquid exiting the flow through heater 50, whereby the controller 1003 is arranged for varying the flow rate, by driving bi-directional pump 60, in order to control the system 4 such that the respective estimate temperature is at the target temperature. This embodiment thereby requires the least sensors for controlling the system, as only a top reservoir temperature sensor 95 would be required.

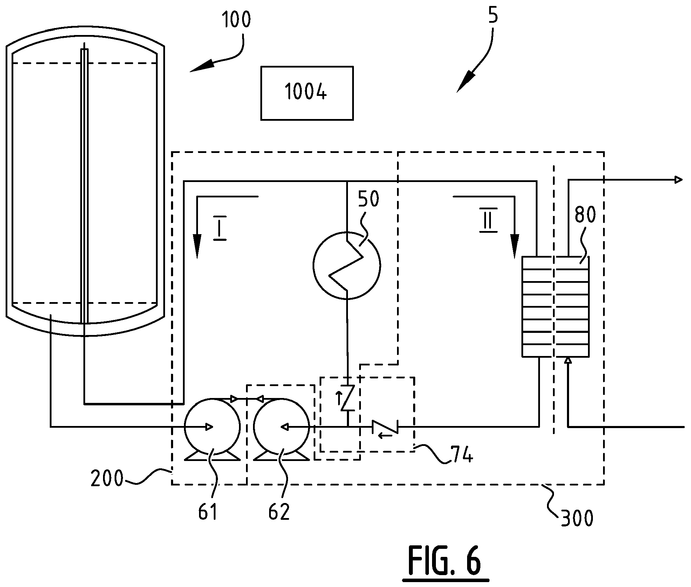

The following fifth and sixth embodiments of the system 5, 6 disclose different alternatives in the setup of the fluid driving units, which may be combined with any of the previous embodiments disclose alternative control strategies. Whereas the embodiments of figures 2 - 5 comprised a single bi-directional pump 60, the fifth embodiment of sensible heat storage system 5 (figure 6) comprises a pair of uni-directional pumps 61, 62. By activating (only) the first uni-directional pump 61, the flow of heat storage fluid is forced through the heat storage charging unit 200 and the flow is allowed to freely flow through the second uni-directional pump 62. By activating (only) the second uni-directional pump 62, the flow of heat storage fluid is forced through the heat storage discharging unit 300 and the flow is allowed to freely flow through the first uni-directional pump 61. The respective controller 1004, which may be similar to the controllers 1000 - 1003 depending on the chosen control strategy, is only different in that it is configured to control the pair of uni-directional pumps 61, 62 instead of the single bi-directional pump 60.

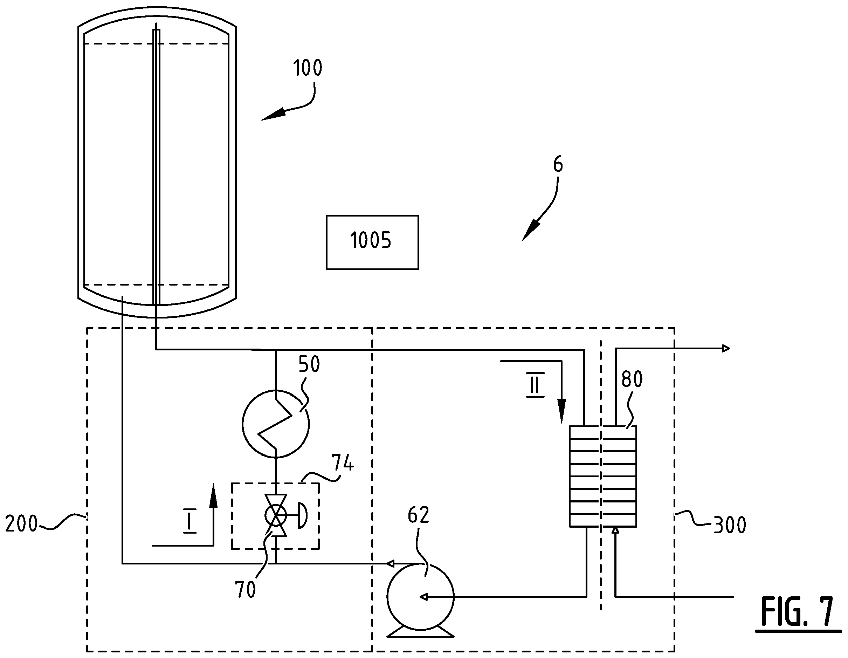

Figure 7 illustrates a schematic representation of the sixth embodiment of a sensible heat storage system 6, as discussed above. Again, the only difference with respect to embodiments 1 - 5 of figures 2 - 6 is in the setup of the fluid driving units. In the sixth embodiment, the first uni-directional pump 61 has been left out, such that only the (uni-) directional pump 62 is provided for driving the flow through the heat storage discharging unit 300, as described above. In the heat storage charging unit 200, the uni-directional pump 61 is replaced by control valve 70 that is arranged for restricting the flow through the heat storage charging unit 200, effectively by increasing a flow resistance.

As the heated liquid, e.g. water, that exits the electrical flow through heater 50, has a lower density than the colder water held in, for instance, the lower layers 16b - 16e of the reservoir, the heated liquid has a tendency to rise through the insulated interior tube 40, thereby effectively generating its own driving mechanism for driving the flow of water through the heat storage charging unit 200. The controller 1005 is then configured for controlling the flow through the heat storage charging unit 200 by controlling the control valve 70, whereby the flow resistance can be set. Control valve 70 is preferably furthermore arranged to also act as the flow direction control unit 74.

The present invention is not limited to the embodiments shown, but extends also to other embodiments falling within the scope of the appended claims. In particular it is noted that the different embodiments for controlling the system, including the respective sensors for control, can be combined with all the different embodiments for setting up the fluid driving units, both of which can be combined with all the different embodiments of the sensible heat storage device and all of which can be combined with all different embodiments of heat storage charging units and/or all different embodiment of different heat storage discharging units.

## Claims

1. Sensible heat storage system (1), comprising a sensible heat storage device (100), comprising:
- a thermally insulated tank (10) comprising an interior reservoir (15) for holding a fluid therewithin;
- a first in- and outlet (20) that enables a fluid connection between the interior reservoir (15) of the thermally insulated tank (10) and an environment outside said thermally insulated tank (10); wherein said first in- and outlet (20) is arranged in a lower section (10a) of the thermally insulated tank (10) and debouches in a lower portion (15a) of the interior reservoir (15);
- a second in- and outlet (30) that enables a fluid connection between the interior reservoir (15) of the thermally insulated tank (10) and an environment outside said thermally insulated tank (10); wherein said second in- and outlet (30) is arranged in a lower section (10a) of the thermally insulated tank (10) and debouches in an upper portion (15b) of the interior reservoir (15);
wherein said second in- and outlet (30) comprises an interior tube (40) that extends upwardly through the interior reservoir (150 from the lower section (10a) of the thermally insulated tank (10) to the upper portion (15b) of the interior reservoir (15) in which it debouches, the sensible heat storage system further comprising
- a heat storage charging unit (200) comprising a heat source, being preferably a flow through heater (50), wherein the heat storage charging unit (200) is arranged for circulating heat storage fluid held in the sensible heat storage device (100) from the first in- and outlet (20) of the sensible heat storage device (100), through the heat source (50) for heating the heat storage fluid and to the second in- and outlet (30) for inserting the heated heat storage fluid into the sensible heat storage device (100)
- a heat storage discharging unit (300), wherein said heat storage discharging unit (300) comprises a flow through heat exchanger (80) that is arranged to be coupled to a heat consuming system (85), such as a hot water and/or heating system of a building, and is arranged for transferring heat from a heat storage fluid to the heat consuming system (85);
wherein the heat storage discharging unit (300) is arranged for circulating heat storage fluid held in the sensible heat storage device (100) through the second in- and outlet of the sensible heat storage device (100), through the flow through the heat exchanger (50) and through the first in- and outlet (20) for inserting the heat storage fluid into the sensible heat storage device (100).

2. Sensible heat storage system according to claim 1, wherein said interior tube (40) is a thermally insulated interior tube.

3. Sensible heat storage system according to any of the preceding claims, wherein said thermally insulated tank (10) comprises:
- an internal vessel (11) that comprises the interior reservoir (15);
- an outer vessel (12) that encloses the internal vessel (11); and
- a first thermal insulation layer (13) that is arranged between the inner and outer vessels (11, 12).

4. Sensible heat storage system according to any of the preceding claims, wherein said first and second in- and outlets (30) are the only in- and outlets of the thermally insulated tank (10) and are, preferably, arranged in the bottom of the thermally insulated tank (10).

5. Sensible heat storage system according to any of the preceding claims, wherein thermally insulated interior tube (40) comprises:
- an internal interior tube (41);
- an outer interior tube (42) that encloses the internal interior tube; and
- an internal space (43) that is arranged between the inner and outer interior tubes;
wherein a pressure in said internal space is lower than 1x10⁴ Pa, preferably lower than 1x10³ Pa, more preferably lower than 1x10² Pa, even more preferably lower than 1 x10¹ Pa, most preferably lower than 1 Pa, and/or
wherein said internal space (43) comprises a second thermal insulation layer, and/or
wherein the internal space (43) has an apparent thermal conductivity in the range of 0.001 W/mK and 1 W/mK, preferably in the range of 0.001 W/mK and 0.1 W/mK, more preferably in the range of 0.001 W/mK and 0.01 W/mK, most preferably in the range of 0.001 W/mK and 0.004 W/mK..

6. Sensible heat storage system according to any of the preceding claims, wherein said first thermal insulation layer (13) comprises a first vacuum insulation element and/or wherein said internal space (43) comprises a second thermal insulation layer comprises a second vacuum insulation element, preferably wherein said first and/or second vacuum insulation element (13) has an apparent thermal conductivity in the range of 0.001 W/mK and 0.004 W/mK at a residual gas pressure of 1x10¹ Pa and a mean temperature between 50 and 300 °C; and/or
wherein the first vacuum insulation element (13) and said internal space (43) are in fluid connection with each other, such that they share a mutual vacuum.

7. Sensible heat storage system according to any of the above claims, wherein the heat source is a flow through heater, wherein said flow through heater (50) is arranged for heating the heat storage fluid to a pre-set target temperature of at least 80°C, preferably at least 85°C, more preferably at least 90°C, most preferably at least 95°C, in a single pass through the flow through heater; and/or
wherein the heat source is a flow through heater, and wherein said flow through heater (50) comprises a spiraling and/or meandering flow path that is arranged on a thick film heating element.

8. Sensible heat storage system according to any of the preceding claims, wherein the heat storage charging unit (200) does not comprise a fluid driving unit, such as a pump, for driving the flow of heat storage fluid through the heat storage charging unit (200).

9. Sensible heat storage system according to any of the preceding claims 1 - 7, wherein the system comprises a first fluid driving unit (60, 61), such as a pump, for driving the flow of heat storage fluid through the heat storage charging unit (200).

10. Sensible heat storage system according to any of the preceding claims, wherein said heat storage charging unit (200) comprises a control valve (70) for selectively restricting the flow rate of the heat storage fluid through the heat storage charging unit (200), in particular through the heat source, preferably through the flow through heater (50); and/or
wherein the system (1, 2, 3, 4, 5, 6) comprises a flow direction control unit (74), in particular wherein the flow direction control unit (74) comprises a first flow control valve and/or that is arranged in the heat storage charging unit (200), that is arranged such that heat storage fluid, when flowing through the heat storage charging unit (200), can only flow in the direction (I) from the first in- and outlet (20), through the heat source, being preferably a flow through heater (50), for heating the heat storage fluid and to the second in- and outlet (30).

11. Sensible heat storage system according to any of the preceding claims, wherein the system further comprises a controller (1000, 1001, 1002, 1003, 1004, 1005) for controlling the flow rate through the heat storage charging unit (200), in particular through the flow through the heat source, preferably through the heater (50), by preferably controlling the control valve (70) and/or fluid driving unit (60);
wherein more preferably the controller comprises an input for receiving an amount of electrical power that is available for the heat storage charging unit (200) for charging said sensible heat storage device (100), wherein more preferably said controller is arranged for controlling the flow through the heat source, preferably through the heater (50) to consume the amount of electrical power available; and/or
wherein more preferably the controller (1000, 1001, 1002, 1003, 1004, 1005) is arranged for controlling the flow rate through the heat storage charging unit (200), in particular through the flow through the heat source, preferably through the heater (50), such that the fluid passing the heat storage charging unit (200), in particular passing the flow through the heat source, preferably through the heater (50), is heated to the pre-set target temperature.

12. Sensible heat storage system according to any of the preceding claims, wherein the flow direction control unit (74) is arranged such that the heat storage fluid, when flowing through the heat storage discharging unit (300), can only flow in the direction (II) from the second in- and outlet (30), through the flow through heat exchanger (80) and to the first in- and outlet (20), wherein the flow direction control unit (74) preferably comprises a second flow control that is arranged in the heat storage discharging unit (300).

13. Sensible heat storage system according to any of the preceding claims, wherein the heat storage discharging unit (300) comprises a second fluid driving unit (60, 62), such as a pump, for driving the flow of heat storage fluid through the heat storage discharging unit (300).

14. Sensible heat storage system according to claim 8 and 13, wherein said second fluid driving unit is a uni-directional second fluid driving unit (62), such as a uni-directional pump, that is arranged in between the second and first in- and outlets (20, 30) along the flow path of the heat discharging unit (300).

15. Sensible heat storage system according to claim 8 and 13, wherein said first and second fluid driving units are formed by a single bi-directional fluid driving unit (60), such as a bi-directional pump, wherein said single bi-directional fluid driving unit (60) is arranged in between the second and first in- and outlets (20, 30) along the flow path of the heat discharging unit (300) and in between the first and second in- and outlets (20, 30) along the flow path of the heat charging unit (200); and/or
wherein said first and second fluid driving units are formed by a pair of uni-directional fluid driving units (61, 62), such as uni-directional pumps, wherein said pair of uni-directional fluid driving units (61, 62) is arranged in series in between the second and first in- and outlets (20, 30) along the flow path of the heat discharging unit (300) and in between the first and second in-and outlets (20, 30) along the flow path of the heat charging unit (200).

## Patentansprüche

1. Speichersystem (1) für fühlbare Wärme, umfassend eine Speichervorrichtung (100) für fühlbare Wärme, umfassend:
- einen thermisch isolierten Tank (10), umfassend ein Innenreservoir (15) zum Aufnehmen eines Fluids darin;
- einen ersten Ein- und Auslass (20), der eine Fluidverbindung zwischen dem Innenreservoir (15) des thermisch isolierten Tanks (10) und einer Umgebung außerhalb des thermisch isolierten Tanks (10) ermöglicht; wobei der erste Ein- und Auslass (20) in einem unteren Bereich (10a) des thermisch isolierten Tanks (10) angeordnet ist und in einen unteren Abschnitt (15a) des Innenreservoirs (15) mündet;
- einen zweiten Ein- und Auslass (30), der eine Fluidverbindung zwischen dem Innenreservoir (15) des thermisch isolierten Tanks (10) und einer Umgebung außerhalb des thermisch isolierten Tanks (10) ermöglicht; wobei der zweite Ein- und Auslass (30) in einem unteren Bereich (10a) des thermisch isolierten Tanks (10) angeordnet ist und in einen oberen Abschnitt (15b) des Innenreservoirs (15) mündet;
wobei der zweite Ein- und Auslass (30) ein Innenrohr (40) umfasst, das sich durch das Innenreservoir (150 von dem unteren Bereich (10a) des thermisch isolierten Tanks (10) nach oben zu dem oberen Abschnitt (15b) des Innenreservoirs (15) erstreckt, in den es mündet, das Speichersystem für fühlbare Wärme ferner umfassend
- eine Wärmespeicherladeeinheit (200), umfassend eine Wärmequelle, die vorzugsweise eine Durchflussheizeinrichtung (50) ist, wobei die Wärmespeicherladeeinheit (200) zum Zirkulieren von Wärmespeicherfluid, das in der Speichervorrichtung (100) für fühlbare Wärme aufgenommen ist, von dem ersten Ein- und Auslass (20) der Speichervorrichtung (100) für fühlbare Wärme durch die Wärmequelle (50) zum Erhitzen des Wärmespeicherfluids und zu dem zweiten Ein- und Auslass (30) zum Einbringen des erhitzten Wärmespeicherfluids in die Speichervorrichtung (100) für fühlbare Wärme angeordnet ist,
- eine Wärmespeicherentladeeinheit (300), wobei die Wärmespeicherentladeeinheit (300) einen Durchflusswärmetauscher (80) umfasst, der angeordnet ist, um mit einem wärmeverbrauchenden System (85), wie einem Heißwasser- und/oder Heizsystem eines Gebäudes, gekoppelt zu werden, und zum Übertragen von Wärme von einem Wärmespeicherfluid auf das wärmeverbrauchende System (85) angeordnet ist;
wobei die Wärmespeicherentladeeinheit (300) zum Zirkulieren von Wärmespeicherfluid, die in der Speichervorrichtung (100) für fühlbare Wärme aufgenommen ist, durch den zweiten Ein- und Auslass der Speichervorrichtung (100) für fühlbare Wärme, durch den Fluss durch den Wärmetauscher (50) und durch den ersten Ein- und Auslass (20) zum Einbringen des Wärmespeicherfluids in die Speichervorrichtung (100) für fühlbare Wärme angeordnet ist.

2. Speichersystem für fühlbare Wärme nach Anspruch 1, wobei das Innenrohr (40) ein thermisch isoliertes Innenrohr ist.

3. Speichersystem für fühlbare Wärme nach einem der vorstehenden Ansprüche, wobei der thermisch isolierte Tank (10) umfasst:
- ein internes Gefäß (11), das das Innenreservoir (15) umfasst;
- ein äußeres Gefäß (12), das das interne Gefäß (11) umschließt; und
- eine erste thermische Isolierschicht (13), die zwischen dem inneren und dem äußeren Gefäß (11, 12) angeordnet ist.

4. Speichersystem für fühlbare Wärme nach einem der vorstehenden Ansprüche, wobei der erste und der zweite Ein- und Auslass (30) die einzigen Ein- und Auslässe des thermisch isolierten Tanks (10) sind und vorzugsweise in dem Boden des thermisch isolierten Tanks (10) angeordnet sind.

5. Speichersystem für fühlbare Wärme nach einem der vorstehenden Ansprüche, wobei das thermisch isolierte Innenrohr (40) umfasst:
- ein internes Innenrohr (41);
- ein äußeres Innenrohr (42), das das interne Innenrohr umschließt; und
- einen internen Raum (43), der zwischen dem inneren und dem äußeren Innenrohr angeordnet ist;
wobei ein Druck in dem internen Raum niedriger als 1x10⁴ Pa, vorzugsweise niedriger als 1x10³ Pa, mehr bevorzugt niedriger als 1x10² Pa, noch mehr bevorzugt niedriger als 1 x10¹ Pa, am meisten bevorzugt niedriger als 1 Pa ist, und/oder
wobei der interne Raum (43) eine zweite thermische Isolierschicht umfasst, und/oder
wobei der interne Raum (43) eine thermische Scheinleitfähigkeit in der Spanne von 0,001 W/mK bis 1 W/mK, vorzugsweise in der Spanne von 0,001 W/mK bis 0,1 W/mK, mehr bevorzugt in der Spanne von 0,001 W/mK bis 0,01 W/mK, am meisten bevorzugt in der Spanne von 0,001 W/mK bis 0,004 W/mK aufweist.

6. Speichersystem für fühlbare Wärme nach einem der vorstehenden Ansprüche, wobei die erste thermische Isolierschicht (13) ein erstes Vakuumisolierelement umfasst und/oder wobei der interne Raum (43) eine zweite thermische Isolierschicht umfasst, die ein zweites Vakuumisolierelement umfasst, wobei das erste und/oder das zweite Vakuumisolierelement (13) vorzugsweise eine thermische Scheinleitfähigkeit in der Spanne von 0,001 W/mK und 0,004 W/mK bei einem Restgasdruck von 1x10¹ Pa und einer mittleren Temperatur zwischen 50 und 300 °C aufweist; und/oder
wobei das erste Vakuumisolierelement (13) und der interne Raum (43) in Fluidverbindung miteinander stehen, sodass sie ein gemeinsames Vakuum teilen.

7. Speichersystem für fühlbare Wärme nach einem der obigen Ansprüche, wobei die Wärmequelle eine Durchflussheizeinrichtung ist, wobei die Durchflussheizeinrichtung (50) zum Erhitzen des Wärmespeicherfluids auf eine voreingestellte Zieltemperatur von mindestens 80 °C, vorzugsweise mindestens 85 °C, mehr bevorzugt mindestens 90 °C, am meisten bevorzugt mindestens 95 °C, in einem einzigen Durchgang durch die Durchflussheizeinrichtung angeordnet ist; und/oder
wobei die Wärmequelle eine Durchflussheizeinrichtung ist, und wobei die Durchflussheizeinrichtung (50) einen spiralförmigen und/oder mäanderförmigen Flussweg umfasst, der auf einem Dickfilmheizelement angeordnet ist.

8. Speichersystem für fühlbare Wärme nach einem der vorstehenden Ansprüche, wobei die Wärmespeicherladeeinheit (200) keine Fluidantriebseinheit, wie eine Pumpe, zum Antreiben des Flusses des Wärmespeicherfluids durch die Wärmespeicherladeeinheit (200) umfasst.

9. Speichersystem für fühlbare Wärme nach einem der vorstehenden Ansprüche 1 bis 7, wobei das System eine erste Fluidantriebseinheit (60, 61), wie eine Pumpe, zum Antreiben des Flusses des Wärmespeicherfluids durch die Wärmespeicherladeeinheit (200) umfasst.

10. Speichersystem für fühlbare Wärme nach einem der vorstehenden Ansprüche, wobei die Wärmespeicherladeeinheit (200) ein Steuerventil (70) zum selektiven Begrenzen der Flussgeschwindigkeit des Wärmespeicherfluids durch die Wärmespeicherladeeinheit (200), insbesondere durch die Wärmequelle, vorzugsweise durch die Durchflussheizeinrichtung (50), umfasst; und/oder
wobei das System (1, 2, 3, 4, 5, 6) eine Flussrichtungssteuereinheit (74) umfasst, insbesondere wobei die Flussrichtungssteuereinheit (74) ein erstes Flusssteuerventil umfasst und/oder das in der Wärmespeicherladeeinheit (200) angeordnet ist, das angeordnet ist, sodass das Wärmespeicherfluid, wenn es die Wärmespeicherladeeinheit (200) durchfließt, nur in der Richtung (I) von dem ersten Ein- und Auslass (20) durch die Wärmequelle, die vorzugsweise eine Durchflussheizeinrichtung (50) ist, zum Erhitzen des Wärmespeicherfluids und zu dem zweiten Ein-und Auslass (30) fließen kann.

11. Speichersystem für fühlbare Wärme nach einem der vorstehenden Ansprüche, wobei das System ferner eine Steuereinrichtung (1000, 1001, 1002, 1003, 1004, 1005) zum Steuern der Flussgeschwindigkeit durch die Wärmespeicherladeeinheit (200), insbesondere durch den Fluss durch die Wärmequelle, vorzugsweise durch die Heizeinrichtung (50), über vorzugsweise das Steuern des Steuerventils (70) und/oder der Fluidantriebseinheit (60) umfasst;
wobei mehr bevorzugt die Steuereinrichtung einen Eingang zum Empfangen einer Menge an elektrischer Leistung umfasst, die für die Wärmespeicherladeeinheit (200) zum Laden der Speichervorrichtung (100) für fühlbare Wärme verfügbar ist, wobei mehr bevorzugt die Steuereinrichtung zum Steuern des Flusses durch die Wärmequelle, vorzugsweise durch die Heizeinrichtung (50), angeordnet ist, um die verfügbare Menge an elektrischer Leistung zu verbrauchen; und/oder
wobei mehr bevorzugt die Steuereinrichtung (1000, 1001, 1002, 1003, 1004, 1005) zum Steuern der Flussgeschwindigkeit durch die Wärmespeicherladeeinheit (200), insbesondere durch den Fluss durch die Wärmequelle, vorzugsweise durch die Heizeinrichtung (50), angeordnet ist, sodass das Fluid, das die Wärmespeicherladeeinheit (200) durchläuft, insbesondere den Fluss durch die Wärmequelle durchläuft, vorzugsweise durch die Heizeinrichtung (50), auf die voreingestellte Zieltemperatur erhitzt wird.

12. Speichersystem für fühlbare Wärme nach einem der vorstehenden Ansprüche, wobei die Flussrichtungssteuereinheit (74) angeordnet ist, sodass das Wärmespeicherfluid, wenn es durch die Wärmespeicherentladeeinheit (300) fließt, nur in der Richtung (II) von dem zweiten Ein- und Auslass (30) durch den Durchflusswärmetauscher (80) und zu dem ersten Ein- und Auslass (20) fließen kann, wobei die Flussrichtungssteuereinheit (74) vorzugsweise eine zweite Flusssteuerung umfasst, die in der Wärmespeicherentladeeinheit (300) angeordnet ist.

13. Speichersystem für fühlbare Wärme nach einem der vorstehenden Ansprüche, wobei die Wärmespeicherentladeeinheit (300) eine zweite Fluidantriebseinheit (60, 62), wie eine Pumpe, zum Antreiben des Flusses des Wärmespeicherfluids durch die Wärmespeicherentladeeinheit (300) umfasst.

14. Speichersystem für fühlbare Wärme nach Anspruch 8 und 13, wobei die zweite Fluidantriebseinheit eine unidirektionale zweite Fluidantriebseinheit (62) ist, wie eine unidirektionale Pumpe, die zwischen dem zweiten und dem ersten Ein- und Auslass (20, 30) entlang des Flusswegs der Wärmeentladeeinheit (300) angeordnet ist.

15. Speichersystem für fühlbare Wärme nach Anspruch 8 und 13, wobei die erste und die zweite Fluidantriebseinheit über eine einzige bidirektionale Fluidantriebseinheit (60), wie eine bidirektionale Pumpe, ausgebildet sind, wobei die einzige bidirektionale Fluidantriebseinheit (60) zwischen dem zweiten und dem ersten Ein- und Auslass (20, 30) entlang des Flusswegs der Wärmeentladeeinheit (300) und zwischen dem ersten und dem zweiten Ein- und Auslass (20, 30) entlang des Flusswegs der Wärmeladeeinheit (200) angeordnet ist; und/oder
wobei die erste und die die zweite Fluidantriebseinheit über ein Paar unidirektionaler Fluidantriebseinheiten (61, 62), wie unidirektionale Pumpen, ausgebildet werden, wobei das Paar unidirektionaler Fluidantriebseinheiten (61, 62) in Reihe zwischen dem zweiten und dem ersten Ein-und Auslass (20, 30) entlang des Flusswegs der Wärmeentladeeinheit (300) und zwischen dem ersten und dem zweiten Ein- und Auslass (20, 30) entlang des Flusswegs der Wärmeladeeinheit (200) angeordnet ist.

## Revendications

1. Système de stockage de chaleur sensible (1), comprenant un dispositif de stockage de chaleur sensible (100), comprenant :
- une cuve isolée thermiquement (10) comprenant un réservoir intérieur (15) pour contenir un fluide à l'intérieur de celle-ci ;
- une première entrée et sortie (20) qui permet une liaison fluidique entre le réservoir intérieur (15) de la cuve isolée thermiquement (10) et un environnement extérieur à ladite cuve isolée thermiquement (10) ; dans lequel ladite première entrée et sortie (20) est disposée dans une section inférieure (10a) de la cuve isolée thermiquement (10) et débouche dans une partie inférieure (15a) du réservoir intérieur (15) ;
- une seconde entrée et sortie (30) qui permet une liaison fluidique entre le réservoir intérieur (15) de la cuve isolée thermiquement (10) et un environnement extérieur à ladite cuve isolée thermiquement (10) ; dans lequel ladite seconde entrée et sortie (30) est agencée dans une section inférieure (10a) de la cuve isolée thermiquement (10) et débouche dans une partie supérieure (15b) du réservoir intérieur (15) ;
dans lequel ladite seconde entrée et sortie (30) comprend un tube intérieur (40) qui s'étend vers le haut à travers le réservoir intérieur (150 depuis la section inférieure (10a) de la cuve isolée thermiquement (10) vers la partie supérieure (15b) du réservoir intérieur (15) dans laquelle il débouche, le système de stockage de chaleur sensible comprenant en outre
- une unité de charge de stockage de chaleur (200) comprenant une source de chaleur, étant de préférence un dispositif de chauffage à écoulement traversant (50), dans lequel l'unité de charge de stockage de chaleur (200) est agencée pour faire circuler le fluide de stockage de chaleur contenu dans le dispositif de stockage de chaleur sensible (100) depuis la première entrée et sortie (20) du dispositif de stockage de chaleur sensible (100), à travers la source de chaleur (50) pour chauffer le fluide de stockage de chaleur et vers la seconde entrée et sortie (30) pour insérer le fluide de stockage de chaleur chauffé dans le dispositif de stockage de chaleur sensible (100)
- une unité d'évacuation de stockage de chaleur (300), dans lequel ladite unité d'évacuation de stockage de chaleur (300) comprend un échangeur de chaleur à écoulement traversant (80) qui est agencé pour être couplé à un système de consommation de chaleur (85), tel qu'un système d'eau chaude et/ou de chauffage d'un bâtiment, et est agencée pour transférer la chaleur d'un fluide de stockage de chaleur au système de consommation de chaleur (85) ;
dans lequel l'unité d'évacuation de stockage de chaleur (300) est agencée pour faire circuler le fluide de stockage de chaleur contenu dans le dispositif de stockage de chaleur sensible (100) à travers la seconde entrée et sortie du dispositif de stockage de chaleur sensible (100), à travers l'écoulement à travers l'échangeur de chaleur (50) et à travers la première entrée et sortie (20) pour insérer le fluide de stockage de chaleur dans le dispositif de stockage de chaleur sensible (100).

2. Système de stockage de chaleur sensible selon la revendication 1, dans lequel ledit tube intérieur (40) est un tube intérieur isolé thermiquement.

3. Système de stockage de chaleur sensible selon l'une quelconque des revendications précédentes, dans lequel ladite cuve isolée thermiquement (10) comprend :
- un récipient interne (11) qui comprend le réservoir intérieur (15) ;
- un récipient externe (12) qui renferme le récipient interne (11) ; et
- une première couche d'isolation thermique (13) qui est agencée entre les récipients interne et externe (11, 12).

4. Système de stockage de chaleur sensible selon l'une quelconque des revendications précédentes, dans lequel lesdites première et seconde entrées et sorties (30) sont les seules entrées et sorties de la cuve isolée thermiquement (10) et sont, de préférence, agencées dans le fond de la cuve isolée thermiquement (10).

5. Système de stockage de chaleur sensible selon l'une quelconque des revendications précédentes, dans lequel le tube intérieur isolé thermiquement (40) comprend :
- un tube intérieur interne (41) ;
- un tube intérieur externe (42) qui renferme le tube intérieur interne ; et
- un espace interne (43) qui est agencé entre les tubes intérieurs interne et externe ;
dans lequel une pression dans ledit espace interne est inférieure à 1 x 10⁴ Pa, de préférence inférieure à 1 x 10³ Pa, plus préférablement inférieure à 1 x 10² Pa, encore plus préférablement inférieure à 1 x 10¹ Pa, le plus préférablement inférieure à 1 Pa, et/ou
dans lequel ledit espace interne (43) comprend une seconde couche d'isolation thermique, et/ou
dans lequel l'espace interne (43) a une conductivité thermique apparente comprise entre 0,001 W/mK et 1 W/mK, de préférence entre 0,001 W/mK et 0,1 W/mK, plus préférablement entre 0,001 W/mK et 0,01 W/mK, le plus préférablement entre 0,001 W/mK et 0,004 W/mK.

6. Système de stockage de chaleur sensible selon l'une quelconque des revendications précédentes, dans lequel ladite première couche d'isolation thermique (13) comprend un premier élément d'isolation sous vide et/ou dans lequel ledit espace interne (43) comprend une seconde couche d'isolation thermique comprend un second élément d'isolation sous vide, de préférence dans lequel lesdits premier et/ou second éléments d'isolation sous vide (13) ont une conductivité thermique apparente dans la plage de 0,001 W/mK et 0,004 W/mK à une pression de gaz résiduel de 1 x 10¹ Pa et à une température moyenne entre 50 et 300 °C ; et/ou
dans lequel le premier élément d'isolation sous vide (13) et ledit espace interne (43) sont en liaison fluidique l'un avec l'autre, de telle sorte qu'ils partagent un vide mutuel.

7. Système de stockage de chaleur sensible selon l'une quelconque des revendications précédentes, dans lequel la source de chaleur est un dispositif de chauffage à écoulement traversant, dans lequel ledit dispositif de chauffage à écoulement traversant (50) est agencé pour chauffer le fluide de stockage de chaleur à une température cible prédéfinie d'au moins 80 °C, de préférence d'au moins 85 °C, plus préférablement d'au moins 90 °C, le plus préférablement d'au moins 95 °C, en un seul passage à travers le dispositif de chauffage à écoulement traversant ; et/ou
dans lequel la source de chaleur est un dispositif de chauffage à écoulement traversant, et dans lequel ledit dispositif de chauffage à écoulement traversant (50) comprend un trajet d'écoulement en spirale et/ou sinueux qui est agencé sur un élément de chauffage à film épais.

8. Système de stockage de chaleur sensible selon l'une quelconque des revendications précédentes, dans lequel l'unité de charge de stockage de chaleur (200) ne comprend pas d'unité d'entraînement de fluide, telle qu'une pompe, pour entraîner l'écoulement de fluide de stockage de chaleur à travers l'unité de charge de stockage de chaleur (200).

9. Système de stockage de chaleur sensible selon l'une quelconque des revendications précédentes 1 à 7, dans lequel le système comprend une première unité d'entraînement de fluide (60, 61), telle qu'une pompe, pour entraîner l'écoulement de fluide de stockage de chaleur à travers l'unité de charge de stockage de chaleur (200).

10. Système de stockage de chaleur sensible selon l'une quelconque des revendications précédentes, dans lequel ladite unité de charge de stockage de chaleur (200) comprend une soupape de commande (70) pour restreindre sélectivement le débit du fluide de stockage de chaleur à travers l'unité de charge de stockage de chaleur (200), en particulier à travers la source de chaleur, de préférence à travers le dispositif de chauffage à écoulement traversant (50) ; et/ou
dans lequel le système (1, 2, 3, 4, 5, 6) comprend une unité de commande de sens d'écoulement (74), en particulier dans lequel l'unité de commande de sens d'écoulement (74) comprend une première soupape de commande d'écoulement et/ou qui est agencée dans l'unité de charge de stockage de chaleur (200), qui est agencée de telle sorte que le fluide de stockage de chaleur, lorsqu'il circule à travers l'unité de charge de stockage de chaleur (200), ne peut s'écouler que dans le sens (I) allant de la première entrée et sortie (20), à travers la source de chaleur, étant de préférence un dispositif de chauffage à écoulement traversant (50), pour chauffer le fluide de stockage de chaleur et vers la seconde entrée et sortie (30).

11. Système de stockage de chaleur sensible selon l'une quelconque des revendications précédentes, dans lequel le système comprend en outre un dispositif de commande (1000, 1001, 1002, 1003, 1004, 1005) pour commander le débit à travers l'unité de charge de stockage de chaleur (200), en particulier à travers l'écoulement à travers la source de chaleur, de préférence à travers le dispositif de chauffage (50), en commandant de préférence la soupape de commande (70) et/ou une unité d'entraînement de fluide (60) ;
dans lequel, plus préférablement, le dispositif de commande comprend une entrée pour recevoir une quantité de puissance électrique qui est disponible pour l'unité de charge de stockage de chaleur (200) pour charger ledit dispositif de stockage de chaleur sensible (100), dans lequel, plus préférablement, ledit dispositif de commande est agencé pour commander l'écoulement à travers la source de chaleur, de préférence à travers le dispositif de chauffage (50), afin de consommer la quantité de puissance électrique disponible ; et/ou
dans lequel, plus préférablement, le dispositif de commande (1000, 1001, 1002, 1003, 1004, 1005) est agencé pour commander le débit à travers l'unité de charge de stockage de chaleur (200), en particulier à travers l'écoulement à travers la source de chaleur, de préférence à travers le dispositif de chauffage (50), de telle sorte que le fluide passant par l'unité de charge de stockage de chaleur (200), en particulier le passage de l'écoulement à travers la source de chaleur, de préférence à travers le dispositif de chauffage (50), est chauffé à la température cible prédéfinie.

12. Système de stockage de chaleur sensible selon l'une quelconque des revendications précédentes, dans lequel l'unité de commande de sens d'écoulement (74) est agencée de telle sorte que le fluide de stockage de chaleur, lorsqu'il s'écoule à travers l'unité d'évacuation de stockage de chaleur (300), ne peut s'écouler que dans le sens (II) allant de la seconde entrée et sortie (30), à travers l'échangeur de chaleur à écoulement traversant (80) et vers la première entrée et sortie (20), dans lequel l'unité de commande de sens d'écoulement (74) comprend de préférence une seconde commande d'écoulement qui est agencée dans l'unité d'évacuation de stockage de chaleur (300).

13. Système de stockage de chaleur sensible selon l'une quelconque des revendications précédentes, dans lequel l'unité d'évacuation de stockage de chaleur (300) comprend une seconde unité d'entraînement de fluide (60, 62), telle qu'une pompe, pour entraîner l'écoulement de fluide de stockage de chaleur à travers l'unité d'évacuation de stockage de chaleur (300).

14. Système de stockage de chaleur sensible selon la revendication 8 et 13, dans lequel ladite seconde unité d'entraînement de fluide est une seconde unité d'entraînement de fluide (62) unidirectionnelle, telle qu'une pompe unidirectionnelle, qui est agencée entre les seconde et première entrées et sorties (20, 30) le long du chemin d'écoulement de l'unité d'évacuation de chaleur (300).

15. Système de stockage de chaleur sensible selon la revendication 8 et 13, dans lequel lesdites première et seconde unités d'entraînement de fluide sont formées par une unité d'entraînement de fluide (60) bidirectionnelle unique, telle qu'une pompe bidirectionnelle, dans lequel ladite unité d'entraînement de fluide (60) bidirectionnelle unique est agencée entre les seconde et première entrées et sorties (20, 30) le long du trajet d'écoulement de l'unité d'évacuation de chaleur (300) et entre les première et seconde entrées et sorties (20, 30) le long du trajet d'écoulement de l'unité de charge de chaleur (200) ; et/ou
dans lequel lesdites première et seconde unités d'entraînement de fluide sont formées par une paire d'unités d'entraînement de fluide (61, 62) unidirectionnelles, telles que des pompes unidirectionnelles, dans lequel ladite paire d'unités d'entraînement de fluide (61, 62) unidirectionnelles est disposée en série entre les seconde et première entrées et sorties (20, 30) le long du chemin d'écoulement de l'unité d'évacuation de chaleur (300) et entre les première et seconde entrées et sorties (20, 30) le long du trajet d'écoulement de l'unité de charge de chaleur (200).
